**Europäisches Patentamt**

**European Patent Office**

**Office européen des brevets**

(19)

(11) Veröffentlichungsnummer: **0 256 151**

**A1**

(12) # EUROPÄISCHE PATENTANMELDUNG

(21) Anmeldenummer: **86111216.7**

(22) Anmeldetag: **13.08.86**

(51) Int. Cl.⁴: **H02G 9/02**

(43) Veröffentlichungstag der Anmeldung:
**24.02.88 Patentblatt 88/08**

(84) Benannte Vertragsstaaten:
**AT DE IT**

(71) Anmelder: **INTERCABLE DI HERBERT MUTSCHLECHNER**
**Via Giuseppe Verdi, 4**
**I-39031 Brunico(IT)**

(72) Erfinder: **Mutschlechner, Herbert c/o INTERCABLE**
**DI HERBERT MUTSCHLECHNER Via Guiseppe Verdi, 4**
**I-39031 Brunico(IT)**

(74) Vertreter: **Körber, Wolfhart, Dr. et al**
**Patentanwälte Dipl.-Ing. H. Mitscherlich**
**Dipl.-Ing. K. Gunschmann Dr.rer.nat. W.**
**Körber Dipl.Ing. J. Schmidt-Evers Dipl.-Ing.**
**W. Melzer Steinsdorfstrasse 10**
**D-8000 München 22(DE)**

(54) **Abdeckelement zum Schutz von unterirdischen Leitungen.**

(57) Ein Abdeckelement (1) zum Schutz von wenigstens einer im Erdreich verlegten Leitung (18) wie eines Kabels, ist so auszugestalten, daß der Materialaufwand für das Abdeckelement (1) verringert bzw. die Schlagfestigkeit des Abdeckelementes (1) erhöht werden kann. Dies wird dadurch erreicht, daß zumindest in dem für die Abdeckung der Leitung (18) vorgesehenen Bereich (19) des Abdeckelementes (1) an dessen Oberseite parallel zueinander verlaufende Profilstege (3) angeordnet sind und der breiteste Abstand (k) zwischen zwei benachbarten Profilstegen (3) nicht größer ist als das etwa 1,25-fach der Profilnuttiefe (t).

FIG.1

EP 0 256 151 A1

## Abdeckelement zum Schutz von unterirdischen Leitungen

Gegenstand der Erfindung ist ein Abdeckelement nach dem Oberbegriff des Anspruchs 1 bzw. 9.

Zum Schutz von unterirdischen Leitungen wie Kabeln werden Abdeckelemente in Form einer geschlossenen Reihe verlegt, deren Zweck es ist, bei einer späteren Freilegung der Leitungen nicht nur eine optische Warnung, sondern auch einen mechanischen Schutz vor unbeabsichtigter Zerstörung der Leitungen, z.B. mittels einer Pickhacke, vorzugeben.

Bekannte Abdeckelemente weisen einen U-förmigen oder plattenförmigen Querschnitt auf, wobei sie durch Verbindungselemente miteinander verbunden einen Schutz-Strang bilden.

Es ist schon vorgeschlagen worden, in dem im verlegten Zustand horizontalen Abschnitt des Abdeckelementes parallel zur Verlegeachse verlaufende Sicken in einem Abstand voneinander anzuordnen, die zur Unterseite des Abdeckelementes ausgeformt sind. Es ist der Zweck dieser Sicken, zum einen die Längs-Steifigkeit des Abdeckelementes zu vergrößern und zum anderen eine seitliche Begrenzung für die vom Abdeckelement abgedeckte Leitung bzw. Leitungen zu schaffen.

Um die erforderliche Schlagfestigkeit eines Abdeckelementes nachweisen zu können, wird dieses der Wucht eines spitzen Schlagdorns aus Metall ausgesetzt, der aus einer bestimmten Höhe (1m) auf des Abdeckelement fallen gelassen wird. Dabei wird das Abdeckelement auf einem Sandbett gelagert, wodurch der späteren Verwendung entsprechende Verhältnisse zu Prüfung der Schlagfestigkeit geschaffen sind.

Die Form des Schlagdorns ist der Form des Zinkens einer Spitzhacke angepaßt. Es handelt sich um einen im Durchmesser runden Schlagdorn mit einer kegeligen Spitze mit zwei Kegelabschnitten. Der erste Kegelabschnitt divergiert von der Spitze selbst zu einem Durchmesser von 25 mm in einem Abstand von 20 mm von der Spitze selbst und schließt somit einen Winkel von etwa 65° ein. Daran schließt sich der zweite Kegelabschnitt an, der sich über eine Länge von 40 mm erstreckt und dabei auf 38 mm, nämlich dem Außendurchmesser des Schlagdorns divergiert. Der zweite Kegelabschnitt ist deshalb beträchtlich schlanker als der erste Kegelabschnitt.

Bei der bekannten Ausgestaltung kann die erforderliche Schlagfestigkeit des Abdeckelementes nur durch eine verhältnismäßig starke Materialdicke erreicht werden.

Der Erfindung liegt die Aufgabe zugrunde, ein Abdeckelement der eingangs bezeichneten Art so auszugestalten, daß der Materialaufwand für das Abdeckelement verringert bzw. die Schlagfestigkeit des Abdeckelements erhöht werden kann.

Diese Aufgabe wird durch die kennzeichnenden Merkmale der Ansprüche 1 bzw. 9 gelöst.

Beide erfindungsgemäßen Ausgestaltungen ergeben zumindest an der Oberseite ein Profil mit Profilstegen und dazwischen liegenden Profilnuten. Die Materialdicke kann im Bereich der Profilstege so groß bemessen werden, daß die erforderliche Schlagfestigkeit erreicht wird.

Die erfindungsgemäße Ausgestaltung gemäß Anspruch 1 ermöglicht es, entweder die Profildicke im Profilgrund zu verringern oder die Schlagfestigkeit des Abdeckelementes zu vergrößern. Dies beruht auf folgendem Sachverhalt. Beim Auftreffen des Schlagwerkzeugs auf eine Profilnut kommt es zu einer Verklemmung des Schlagwerkzeugs zwischen einenander benachbarten Profilstegen, bevor die Spitze des Schlagwerkzeugs auf den Profilgrund auftrifft. Aufgrund der Verklemmung wird ein wesentlicher Teil der Schlagenergie seitlich in die Profilstege eingeleitet. Folglich trifft das Schlagwerkzeug mit einer erheblich verringerten Schlagenergie auf den Profilgrund auf. Infolgedessen kann der Profilgrund entsprechend dünner bemessen werden. Andernfalls wird die Schlagfestigkeit des Abdeckelementes wesentlich vergrößert.

Bei der Ausgestaltung gemäß Anspruch 9 beruht entweder die Materialeinsparung oder die Erhöhung der Schlagfestigkeit darauf, daß durch die Profilierung Flanken geschaffen werden, die der Schlagwirkung weniger ausgesetzt sind, weil das Schlagwerkzeug an den Flanken abrutscht. Deshalb kann die Materialdicke im Bereich dieser Flanken entsprechend geringer bemessen werden, oder die erfindungsgemäße Ausgestaltung führt zu einer wesentlichen Erhöhung der Schlagfestigkeit. Wie schon bei der Ausgestaltung gemäß Anspruch 1 kann auch bei der Ausgestaltung gemäß Anspruch 9 die Materialdicke im Bereich der Profilstege so groß bemessen werden, daß die erforderliche Schlagfestigkeit erreicht wird.

Beiden erfindungsgemäßen Ausgestaltungen ist ebenfalls gemeinsam, daß eine Längs-Versteifung des Abdeckelementes automatisch einbezogen ist, wenn die erfindungsgemäßen Profilstege längs der Verlegeachse verlaufen.

Die Ausgestaltung nach Anspruch 2 ermöglicht eine weitere Materialersparnis bzw. Vergrößerung der Schlagfestigkeit, weil die Profilscheitel dem Schlagwerkzeug weniger Angriffsfläche bieten.

Die erfindungsgemäßen Profilstege lassen sich in einfacher Weise durch eine wellenförmige Profilierung des Abdeckelementes gemäß Anspruch 3 bilden, wodurch eine weitere Materialersparnis erreicht wird. Dabei kann die Materialdicke des Profils gemäß Anspruch 4 gleich bemessen sein.

Insbesondere bei breiter Ausführung zumindest der oberen Profilscheitel ist es jedoch vorteilhaft, die gefährdeten Abschnitte der Profilierung, nämlich den Profilscheitel und/oder den Profilgrund durch Materialansammlungen gemäß den Ansprüchen 5 bis 7 zu verstärken.

Die vorbeschriebene Klemmwirkung zwischen einander benachbarten Profilstegen und dem Schlagwerkzeug läßt sich auch durch die Ausbildung nach Anspruch 8 erreichen, wobei es sich hinsichtlich einer geringen Flächenpressung empfiehlt, den Flankenwinkel nur geringfügig kleiner als den Keilwinkel des Schlagwerkzeugs zu bemessen.

Die Ausbildungen nach den Ansprüchen 10 und 11 verringern die Angriffswirkung des Schlagwerkzeugs im Bereich der Profilstege. Dabei wird das Schlagwerkzeug von den Profilstegen abgeleitet (abrutschen), wodurch die Wirksamkeit des Schlagwerkzeugs reduziert wird.

Durch die Ausbildung nach Anspruch 12 läßt sich die Materialdicke im geringsten Querschnittsbereich vergrößern. Dies ist insbesondere dann von Vorteil, wenn zwischen den Profilstegen zur Kerbwirkung neigende Hohlecken vorhanden sind.

Der Ausgestaltung nach Anspruch 5 ist selbständige erfinderische Bedeutung zuzumessen, weil die durch sie erzielbaren Vorteile unabhängig sind von der Ausgestaltung nach Anspruch 1, nämlich unabhängig von der Bemessung des Abstands zwischen benachbarten Profilstegen.

Nachfolgend wird die Erfindung anhand von in vereinfachten Zeichnungen dargestellten bevorzugten Ausführungsbeispielen näher erläutert. Es zeigt

Fig. 1 ein erfindungsgemäß ausgestaltetes Abdeckelement in perspektivischer Darstellung;

Fig. 2 ein Schlagwerkzeug in der Seitenansicht;

Fig. 3 ein erfindungsgemäß ausgestaltetes Abdeckelement im etwas vergrößerten Teilschnitt als zweites Ausführungsbeispiel;

Fig. 4 ein erfindungsgemäß ausgestaltetes Abdeckelement im etwas vergrößerten Teilschnitt als drittes Ausführungsbeispiel;

Fig. 5 ein erfindungsgemäß ausgestaltetes Abdeckelement in perspektivischer Darstellung als viertes Ausführungsbeispiel.

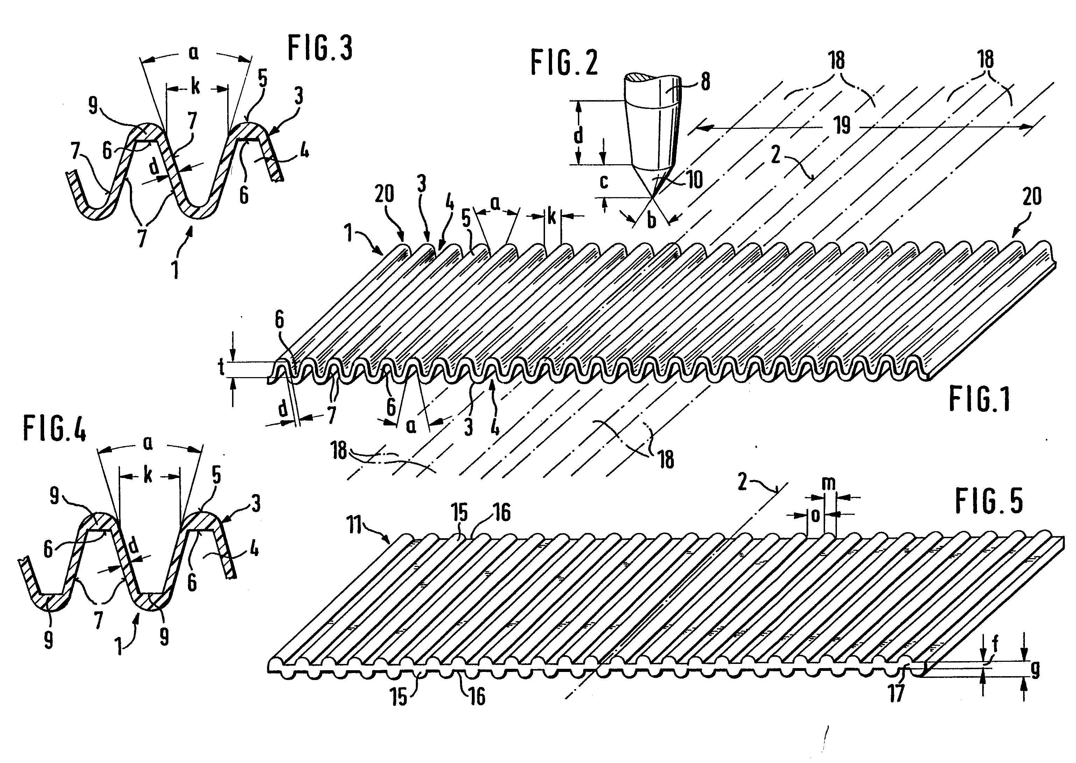

Bei allen dargestellten Abdeckelementen 1, 11 handelt es sich um Platten, die längs der Verlegeachse 3 profiliert sind. Beim Abdeckelement 1 gemäß Fig. 1, 3 und 4 handelt es sich um ein wellenförmiges Profil, wodurch sich Profilstege 3 und Profilnuten 4 mit leicht gerundeten Profilscheiteln 5 und Profilgründen 6 ergeben. Die sich zwischen den Profilscheiteln 5 und den -gründen 6 quer zur Ebene des Abdeckelementes 1 erstreckenden Flanken sind mit 7 bezeichnet.

Es empfiehlt sich, die Profilscheitel 5 und -gründe 6 möglichst schmal auszuführen, d.h. eckig auslaufen zu lassen oder zu runden, insbesondere nur geringfügig zu runden, so daß einem in Fig. 2 dargestellten Schlagwerkzeug 8, das einen Prüf-Schlagdorn oder die Spitze einer Pickhacke darstellt, nur eine geringe oder eine geringstmögliche Angriffsfläche geboten wird.

Der von den Flanken 7 eingeschlossene offene Winkel a ist geringer bemessen als der Spitzenwinkel b des Schlagwerkzeugs 8, dessen Kegel-Spitze 10 über eine Länge c von 20 mm auf 25 mm Durchmesser des im Querschnitt runden Schlagwerkzeugs 8 divergiert. An diesen ersten Kegelabschnitt schließt sich ein zweiter Kegelabschnitt an, der über eine Länge d von 40 mm auf 38 mm divergiert. Das Schlagwerkzeug 8 besteht aus Stahl, wiegt beim vorliegenden Ausführungsbeispiel etwa 100 N und wird zum Zweck eines Schlagversuchs von einer Höhe von 1 m auf das in Sand gebettete Abdeckelement 1 fallengelassen. Die Schlagfestigkeit ergibt sich aus dem Maß der Beschädigung, daß das Schlagwerkzeug 8 am Abdeckelement 1 hervorruft.

Außerdem ist der Abstand k zwischen benachbarten Profilstegen 3 kleiner bemessen als der Durchmesser des ersten Kegelabschnitts, der sich im oberen Bereich der Profilstege ergibt, wenn die Spitze sich am Profilgrund 6 befindet, d.h., in Abhängigkeit der Nuttiefe t.

Beim Aufschlagen des Schlagwerkzeugs 8 auf das Abdeckelement 1 werden die Flanken 7 weniger beansprucht, als die Profilscheitel 5 und die Profilgründe 6, weil das Schlagwerkzeug 8 von den Flanken 7 abrutscht. Aufgrund des vorbeschriebenen Abstands k bzw. Spitzenwinkels b wird das Schlagwerkzeug 8 - weil es von den gerundeten Profilscheiteln 5 abgelenkt wird - in den meisten Fällen im Bereich der mit 4 bezeichneten Profilnuten auftreffen, wobei das Schlagwerkzeug 8 seitlich zwischen den Profilscheiteln 5 oder den mit 3 bezeichneten Profilstegen einklemmt und einen seitlichen Druck auf die Profilstege 3 ausübt. Hierdurch wird ein beträchtlicher Teil der Schlagenergie in die Profilstege 3 eingeleitet. Die Profilstege 3 können diese Energie aufgrund der Elastizität des vorzugsweise aus Kunststoff bestehenden Abdeckelements 1 ohne Beschädigung aufnehmen. Wenn das Schlagwerkzeug 8 überhaupt noch bis zum Profilgrund 6 gelangt, dann ist dessen Schlagenergie schon so weit reduziert, daß eine Beschädigung des Profilgrundes 6 verhindert ist. Bei dieser Ausgestaltung kann das Abdeckelement 1 eine verhältnismäßig geringere, ggf. gleichmäßige Materialdicke d aufweisen, weil die Flanken 6 weniger beansprucht werden und die oberen Profilscheitel 5 aufgrund ihrer geringen Breite verstärkt sind, die sich aufgrund der durchgehenden, insbesondere gleichmäßigen Wellung ergibt.

Insbesondere dann, wenn die oberen Profilscheitel 5 breiter oder weniger stark gerundet sind, empfiehlt es sich, die Festigkeit in den oberen Profilscheiteln 5 durch Materialverdickungen herbeizuführen, die gemäß Fig. 3 durch eine Materialansammlung 9 in den oberen Profilgründen 6 gebildet sind. Die Formgebung der Materialansammlungen 9 kann unterschiedlich sein. Dargestellt ist eine die Profilgründe 6 kreisabschnittförmig ausfüllende Materialansammlung 9 bzw. -verdickung. Bei dieser Ausgestaltung kann im Bereich der Flanken 7 und der unteren Profilgründe 6 Material eingespart werden, wobei die oberen Profilscheitel 5 breiter bemessen werden können (ggf. ungleichmäßige Wellung).

Beim Ausführungsbeispiel gemäß Fig. 4 sind Materialansammlungen 8 bzw. -verdickungen in den oberen und unteren Profilgründen 6 angeordnet. Diese Ausgestaltung eignet sich auch bei breiter bemessenen Abständen k oder weniger stark gerundeten Profilscheiteln 5 und/oder Flankenwinkeln a von mehr als 65°.

Beim Ausführungsbeispiel gemäß Fig. 5, das ebenfalls aus Kunststoff besteht, weist das Abdeckelement 11 an seiner Ober- und Unterseite parallel zur Verlegeachse 2 verlaufende Profilstege 15 auf, die versetzt zueinander angeordnet sind, d.h. jedem Profilsteg 15 liegt auf der anderen Seite des Abdeckelementes 11 eine Profilnut 16 gegenüber. Es ergeben sich somit im Bereich der Profilstege 15 eine maximale Materialdicke f und im Bereich zwischen zwei auf beiden Seiten des Abdeckelementes 2 aneinander gegenüberliegenden Profilstegen 15 eine minimale Materialdicke g. Letztere ist unschädlich, da in diesem mit 17 bezeichneten Bereich eine geringere Beanspruchung durch das Schlagwerkzeug 7 erfolgt und zwar aufgrund ähnlicher Bedingungen, wie sie bezüglich der Flanken 7 beim Ausführungsbeispiel gemäß Fig. 1, 3 und 4 erklärt wurden. Die Profilstege 15 weisen beim vorliegenden Ausführungsbeispiel eine halbkreisförmige Querschnittsform auf. Die Breite m der Profilstege 15 ist gleich breit bemessen wie die Breite o der Profilnuten 16. Sie kann aber auch geringfügig größer bemessen sein, so daß die Profilstege 15 einander geringfügig überlappen. Im Vergleich mit dem Ausführungsbeispiel gemäß Fig. 1, 3 und 4 wird bei diesem Ausführungsbeispiel die verbesserte Schlagfestigkeit des Abdeckelementes 11 durch einen geringeren Materialaufwand erreicht.

Es ist auch beim Ausführungsbeispiel gemäß Fig. 5 möglich, den Abstand k gemäß Fig. 1 zwischen den Profilstegen 15 zu verwirklichen. In einem solchen Fall könen die Profilstege 15 an der Unterseite des Abdeckelements 11 entfallen.

Alle Ausführungsbeispiele haben den gemeinsamen Vorteil, daß durch die erfindungsgemäße Profilierung sowohl die Versteifung längs der Verlegeachse 2 als auch eine Vergrößerung der Schlagfestigkeit erreicht wird.

Zwecks Verdeutlichung der Abdeckposition sind in der Fig. 1 unterhalb des Abdeckelementes 1 vier Leitungen oder Kabel 18 beispielhaft dargestellt. Insbeosndere angesichts dieser Darstellung ist es verständlich, daß es einer erfindungsgemäßen Profilierung nur in dem mit 19 bezeichneten Abdeckbereich der Abdeckelemente 1, 11 bedarf. Die die Kabel 18 nicht abdeckenden Randbereiche 20 könnten eben ausgeführt sein.

Den Abdeckelementen 1, 11 sind an ihren Stirnseiten in an sich bekannter Weise Verbindungsgelemente zugeordnet (nicht dargestellt), die formschlüssig ineinandergreifen und die Abdeckelemente zu einer Kette verbinden.

## Ansprüche

1. Abdeckelement zum Schutz von wenigstens einer im Erdreich verlegten Leitung wie eines Kabels,
dadurch gekennzeichnet,
daß zumindest in dem für die Abdeckung der Leitung (18) vorgesehenen Bereich (19) des Abdeckelementes (1, 11) an dessen Oberseite parallel zueinander verlaufende Profilstege (3) angeordnet sind und der breiteste Abstand (k) zwischen zwei benachbarten Profilstegen (3) nicht größer ist als das etwa 1,25-fache der Profilnuttiefe (t).

2. Abdeckelement nach Anspruch 1,
dadurch gekennzeichnet,
daß die Scheitel (5) der Profilstege (3) spitz auslaufen oder gerundet sind.

3. Abdeckelement nach Anspruch 1 oder 2,
dadurch gekennzeichnet,
daß die Profilstege (3) durch eine wellenförmige Profilierung des Abdeckelementes (1, 11) gebildet sind.

4. Abdeckelement nach einem der Ansprüche 1 bis 3,
dadurch gekennzeichnet,
daß die Materialdicke (d) des Profils gleich ist.

5. Abdeckelement, insbesondere nach einem der Ansprüche 1 bis 3,
dadurch gekennzeichnet,
daß das Abdeckelement (1) im Bereich wenigstens eines der Profilscheitel (5) dicker bemessen ist als im Bereich der Flanken (7).

6. Abdeckelement, nach Anspruch 5,
dadurch gekennzeichnet,
daß das Abdeckelement (1) im Bereich der oberen Profilscheitel (5) dicker oder dünner bemessen ist als im Bereich der unteren Profilscheitel (5).

7. Abdeckelement nach Anspruch 5 oder 6,
dadurch gekennzeichnet,
daß die Verdickung (9) im Bereich des Profilgrundes (6) angeordnet ist.

8. Abdeckelement nach einem der Ansprüche 1 bis 7,
dadurch gekennzeichnet,
daß die Flanken (7) der Profilstege (3) einen offenen Winkel (a) zwischen sich einschließen, der kleiner, vorzugsweise geringfügig kleiner ist als etwa 65°.

9. Abdeckelement zum Schutz von wenigstens einer im Erdreich verlegten Leitung wie eines Kabels,
dadurch gekennzeichnet,
daß das Abdeckelement (11) zumindest in dem für die Abdeckung der Leitung (18) vorgesehenen Bereichen (19) auf beiden Seiten derart zueinander versetzt angeordnete Profilstege (15) aufweist, daß jedem Profilsteg (15) auf der anderen Seite des Abdeckelementes (11) eine Profilnut (16) gegenüberliegt.

10. Abdeckelement nach Anspruch 9,
dadurch gekennzeichnet,
daß die Profilstege (15) gerundet sind.

11. Abdeckelement nach Anspruch 10,
dadurch gekennzeichnet,
daß die Profilstege (15) einen halbkreisrunden Querschnitt aufweisen.

12. Abdeckelement nach einem der Ansprüche 9 bis 11,
dadurch gekennzeichnet,
daß die Profilstege (15) einander geringfügig überlappen.

0 256 151

FIG.1 FIG.2 FIG.3 FIG.4 FIG.5

86111216.7

Europäisches

Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## X MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

1) Patentansprüche 1-8

2) Patentansprüche 9-12

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: 1-8